# EUROPEAN PATENT APPLICATION

(11) **EP 4 707 125 A1**
(43) Date of publication of application: **11.03.2026**
(21) Application number: 24889840.5
(22) Date of filing: 05.11.2024
(51) Int. Cl.: B62D 1/185, B62D 1/19, B62D 1/16

(54) **STEERING COLUMN**

(30) Priority: 13.11.2023 BR 202023023718 U
(71) Applicant: Ivanow, Gideão Marques, Condomínio Residencial Sun Lake, Sorocaba (BR)
(72) Inventor: MACHADO, Rodrigo Moraes Lessa, 18132-380 SÃO ROQUE (BR); IVANOW, Gideão Marques, SOROCABA (BR)
(74) Representative: Gallego Jiménez, José Fernando
(86) International application number: PCT/BR2024/050506
(87) International publication number: WO 2025/102136

(57) **Abstract**

The invention relates to a steering column comprising a body formed by three telescopically assembled segments, namely an outer square tubular segment (1), inside which an intermediate square tubular segment (2) slides, inside which an inner square solid segment (3) slides; a sealing head (4) is positioned between the upper ends of segments (1) and (2); the inner solid segment (3) has one end equipped with a splined cylindrical end-piece (5) and, at the opposite end, the outer square tubular segment (1) is also equipped with another splined cylindrical end-piece (6), both of which are provided with a conventional universal joint (J); stroke limiters (11) and clearance compensators (12) are mounted on the aforementioned segments.

## Description

### Technical Field

More specifically, the present utility model relates to the auto parts sector and refers to technical and functional improvements introduced in the utility model patent application BR202022017343 filed on 08/30/2022, also titled STEERING COLUMN, formed by three telescopic elements.

### State of the Art

Initially, the BR202022017343 application highlights the fact that there is a considerable range of telescopic columns for vehicles in general. However, for cargo vehicles or large vehicles, the steering column must have certain particularities, which did not happen with those known, where normally there is a model for each type of vehicle, which adds up to a great variety of columns. As a result, the auto parts sector is usually required to maintain a considerable inventory, while a more compact model with a substantially longer, self-adjusting stroke length, capable of serving a wider range of vehicle models, would be desirable.

There is no doubt that existing models are adequate and have their respective advantages. However, in most cases, they have a limited "stroke length" and are not compact, which generally establishes that each model is restricted to a specific group of vehicles, and in some cases, only serves a specific car model. Thus, conventional models end up generating other disadvantages, not only because they have a considerable number of components, but also in terms of logistical disadvantages in manufacturing and distribution.

In view of this, the BR202022017343 application added several modifications to configure a steering column with three telescopically mounted segments, all of them with a square cross-section, being an inner, an outer and an intermediate segment. The inner segment is solid, while the other two are tubular. All of them with details that add functionality and means to, initially, considerably increase the column's "stroke length" limit, something around 50% compared to conventional models. Even so, the assembly in the retracted position is substantially more compact, being about 1/3 of its total length.

The versatility of "longer stroke length" results in another advantage, as it establishes means for the same model not to be restricted to a specific group of vehicles, since the "longer stroke length" condition allows the assembly to be self-adjusted and used in a much larger number of vehicle models.

On the other hand, the present steering column has a considerably reduced number of components. Consequently, it also reduces its manufacturing cost and avoids noise.

It is also worth noting that when the present steering column is fully retracted, it becomes very compact, streamlining different parts of the industrial and commercial sector, i.e., it occupies little storage space, facilitates transport, reduces packaging material, in short, all this is extremely advantageous for manufacturing and commercial logistics.

Another advantage of the present steering column is the fact that it includes backlash compensators, which allow fine self-adjustment of the telescopically mounted parts, including reducing friction and eliminating noise, thus significantly improving the sliding of the telescopic parts.

In this way, it has been proven that the BR202022017343 application presented as a novelty and functional improvement: the fact that it has three telescopic segments; a system of end-of-stroke locking pins; and an internal noise reduction system defined by clearance compensators in the form of leaf springs, resulting in a compact assembly with means to be used in a considerable range of vehicles.

There is no doubt that application BR202022017343 introduced significant innovations in the manufacture of STEERING COLUMNS. However, in subsequent studies and tests it was noted that the internal noise reduction system, defined by clearance compensators in the form of leaf springs, could be considerably improved, not only to further reduce friction between the telescopic segments, but also to virtually eliminate noise.

### Objectives of the model

In the previous model, a steering column with three telescopic segments was configured, one fixed and two moving, the latter with at least one leaf spring each. Consequently, they are maintained with a certain expansion pressure compensating for clearances and also reduce friction and noise between the parts. However, at a higher cost, and even so, in tests carried out it was observed that said springs or such a system could be eliminated.

In this way, the aforementioned springs, which are moving (flexible) parts, were completely eliminated and replaced by a static (without moving parts) sliding and clearance compensation system.

In place of said springs, the two moving parts have their inner ends with short recessed sections all around their outer contour, each fully coated with a polymeric layer by means of a process of heating the part and immersing it "in polyamide powder", configuring a contact layer with a thickness between 2 and 6 mm, whose function is to eliminate clearances and noise, replacing the springs with advantages, particularly cost reduction.

### Description of the drawings

For a better understanding of the present utility model, a detailed description thereof is given below, with reference to the attached drawings listed below.
FIGURE 01 is a perspective view of the fully assembled steering column.
FIGURE 02 also shows a perspective view of the fully assembled steering column, but at a different angle in relation to figure 1.
FIGURE 03 illustrates an exploded perspective view of the assembly and two enlarged details thereof.
FIGURE 04 is a perspective view and an enlarged detail, showing one of the universal joints.
FIGURE 05 shows a perspective view of the assembled unit, a partial section and an exploded view of said section, highlighting the seal.
FIGURE 06 represents a side view in section of the assembly and an enlarged detail thereof, highlighting the parts of the telescopic movement limiting locks.
FIGURE 07 is also a side view in section of the assembly and an enlarged detail of the same, highlighting other parts of the telescopic movement limiting locks.
FIGURE 08 also shows a side view in section of the assembly and two enlarged details of the same, highlighting other parts of the telescopic movement limiting locks.
FIGURE 09 illustrates a side view in section of the assembly and two enlarged and exploded details, highlighting the backlash compensators.
FIGURE 10 illustrates an enlarged view of the detail indicated in figure 9, highlighting the backlash compensator.
FIGURE 11 represents an enlarged view of another detail indicated in figure 9, also highlighting the backlash compensator.

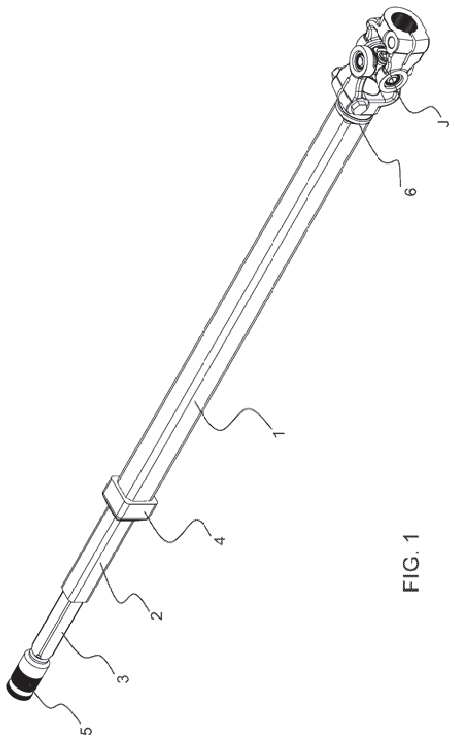

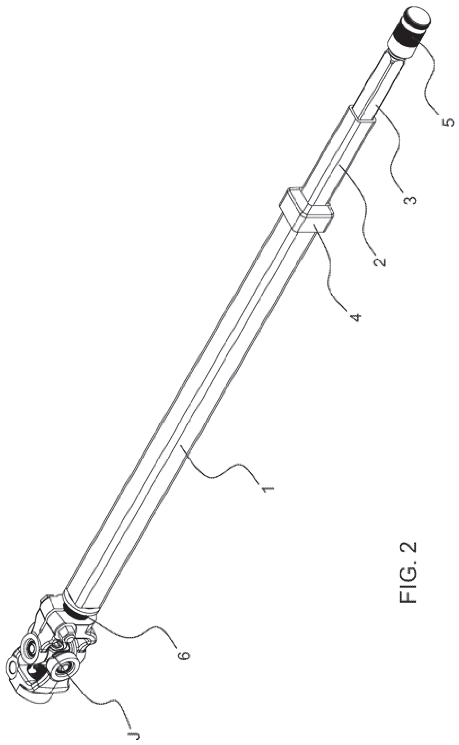

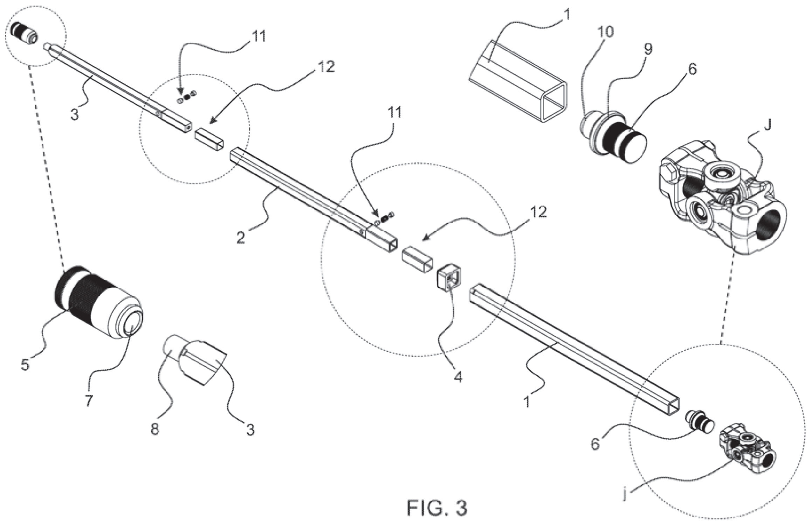

According to these illustrations and their details, more particularly figures 1 to 3, the present STEERING COLUMN comprises:
- A body in three telescopically mounted segments, an outer square tubular segment (1), without telescopic movement after being mounted on the vehicle, inside which slides an intermediate square tubular segment (2) and, inside this, slides a solid square inner segment (3);
- A sealing head (4) is positioned between the upper end of the outer square tubular segment (1) and the intermediate square tubular segment (2), as well as such head is fixed to the upper end of the first outer square tubular segment (1) serving as a sliding sealing point for the intermediate square tubular segment (2);
- The internal solid segment (3) has one end fitted with a grooved cylindrical terminal (5) and, on the opposite side, the external square tubular segment (1) is similarly fitted with another grooved cylindrical terminal (6), both fixed by welding, wherein the first has a hole (7) that receives a cylindrical tip (8) from the internal solid segment (3), while the other grooved cylindrical terminal (6) has an intermediate flange (9) and a cylindrical tip (10) inserted into the interior of the end of the external square tubular segment (1), where the complete closure of the lower end of the assembly occurs by means of suitable welding, which allows telescopic movement of the other two segments (2) and (3) only in the opposite direction to said grooved cylindrical terminal (6);
- A standard universal joint (J) is coupled to the splined cylindrical terminal (6), which may or may not also be provided in the splined cylindrical terminal (5);
- Stroke limiters (11) are mounted near the lower ends,
   respectively, of the square tubular intermediate segment (2) and the solid square inner segment (3), which limit the stroke of each telescopic segment, preventing them from coming out completely when extended to the maximum position;
- Backlash compensators (12) are mounted on the inner or lower ends of the square tubular intermediate segment (2) and the solid square inner segment (3), where these compensators, in addition to allowing fine adjustment to eliminate backlash, also function as a noise reduction device and a means to facilitate the sliding of the telescopic segments.

As already mentioned, the two splined cylindrical terminals (5) and (6) can receive universal joints (J) which provide means, respectively, for coupling the corresponding parts of a vehicle's steering system, notably the steering wheel and the steering box, where such parts, depending on the vehicle model, are coupled directly using a standard universal joint (J) at one or both ends of the assembly, and other standard components may also be included, whether intermediate or replacing one of the universal joints (J), so that the steering column can be assembled, completing a mechanism that allows the movements exerted by the driver on the steering wheel to be transferred to the steering mechanism (steering box), providing adequate drivability according to the technical features of each vehicle.

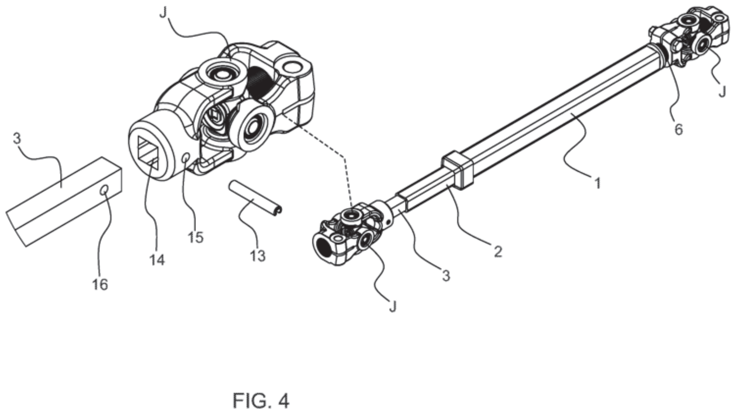

As already mentioned, a conventional universal joint (J) is coupled to the splined cylindrical terminal (6), which may or may not also be provided in the splined cylindrical terminal (5) and, in the latter, as shown in figure 4, the fastening between said conventional universal joint (J) and the solid square inner segment (3) can be carried out with a transverse elastic pin (13) and, for this purpose, the base of the conventional universal joint (J) has a square fitting (14) and a transverse hole (15) which is repeated (16) at the corresponding end of the solid square inner segment (3), through which the said elastic pin (13) passes for fastening between the two parts.

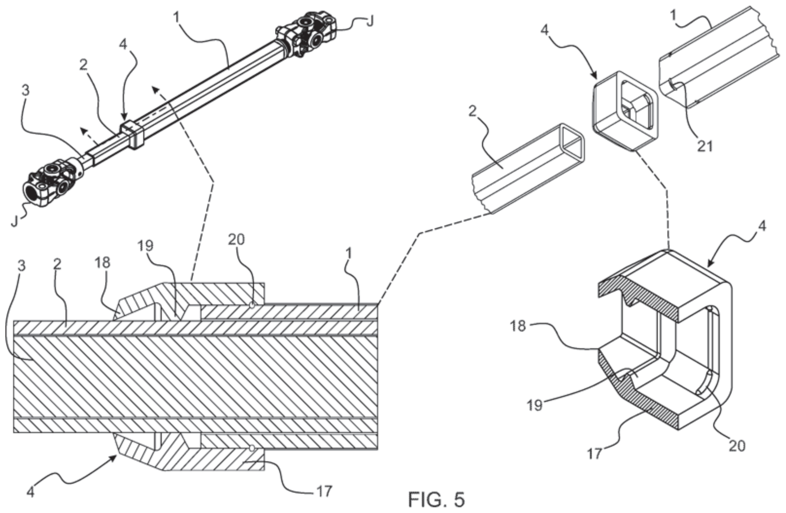

The sealing head (4) is illustrated in detail in Figure 5, where it can be seen that it is formed by a rubber body (17), hollow
longitudinally, and with a square cross-section, having a tapered end or pyramidal trunk that forms a first sealing lip (18) that molds and slides around the outer faces of the intermediate square tubular segment (2).

The body (17) of the sealing head (4) includes a second sealing lip (19), internal and next to the base of the tapered end. This sealing lip (19) surrounds the entire interior of the body (17) and has an ordinarily triangular cross-section with an acute part facing inwards that acts against the external faces of the intermediate square tubular segment (2), where the fixing of said sealing head (4) is complemented by a cord-shaped protrusion (20) that emerges on the inner side of the body (17) and very close to its lower end, this cord (20) being continuous or segmented, and also cooperating to be embedded in a contour channel (21) made on the outer side of the corresponding end of the external square tubular segment (1), thus completing the fixing of said sealing head (4) which, in turn, provides means to seal the interstices formed between the intermediate square tubular segment (2) and the external square tubular segment (1), since an adequate portion of lubricant is normally maintained inside the assembly.

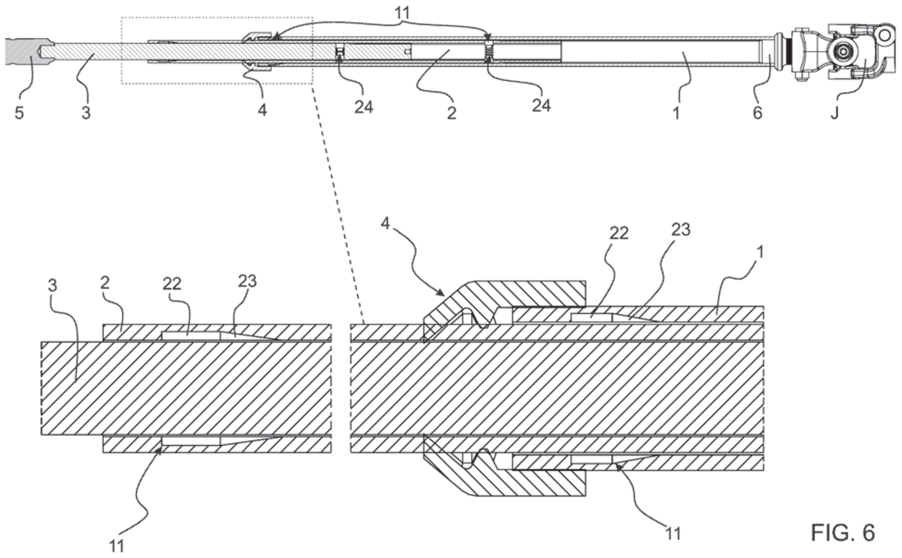

With regard to figure 6, each stroke limiter (11) is initially formed by a wedge-shaped recess that configures a stroke limiter stop step (22) preceded by an invitation ramp (23), configured on the inner faces and near the upper ends of the outer square tubular segment (1) and the intermediate square tubular segment (2), where such stroke limiter stop steps (22) and respective invitation ramps (23) work together with transverse locks (24).

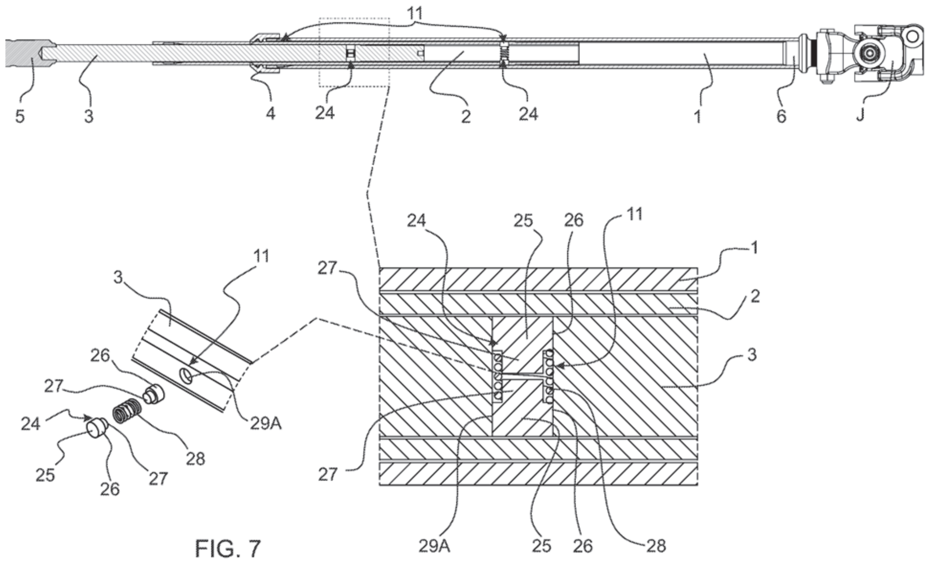

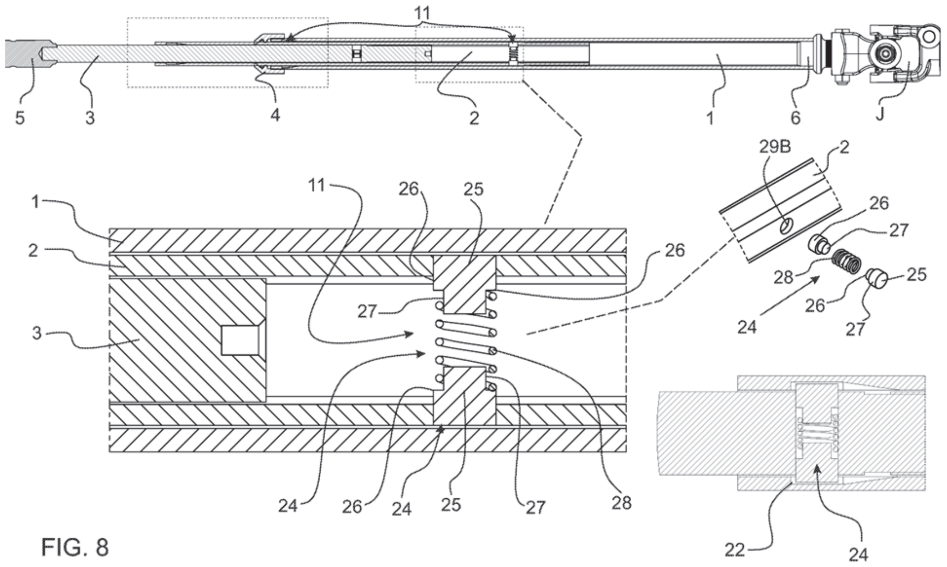

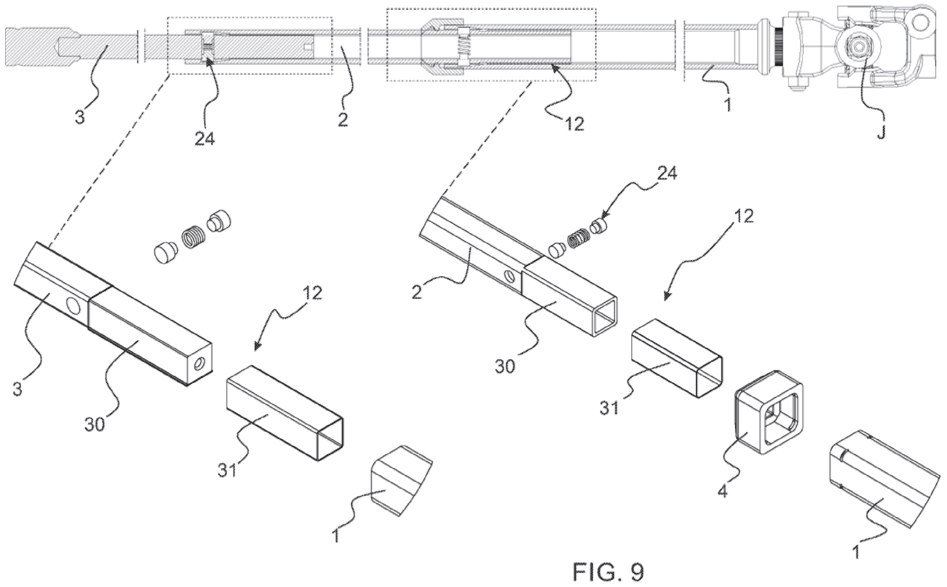

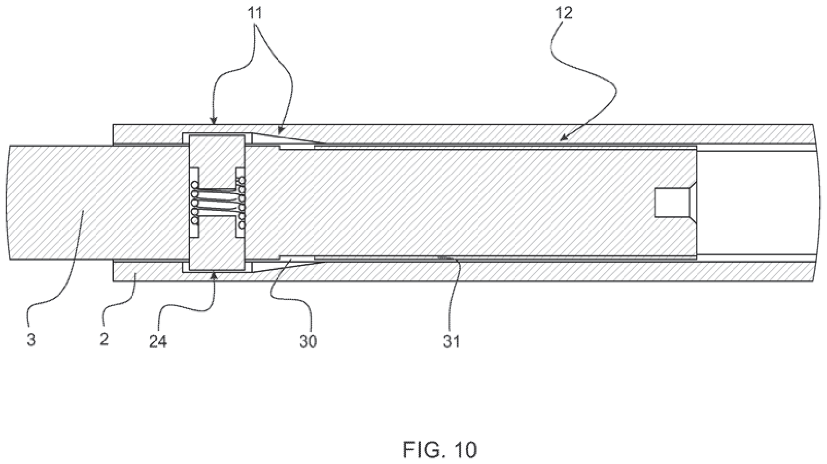

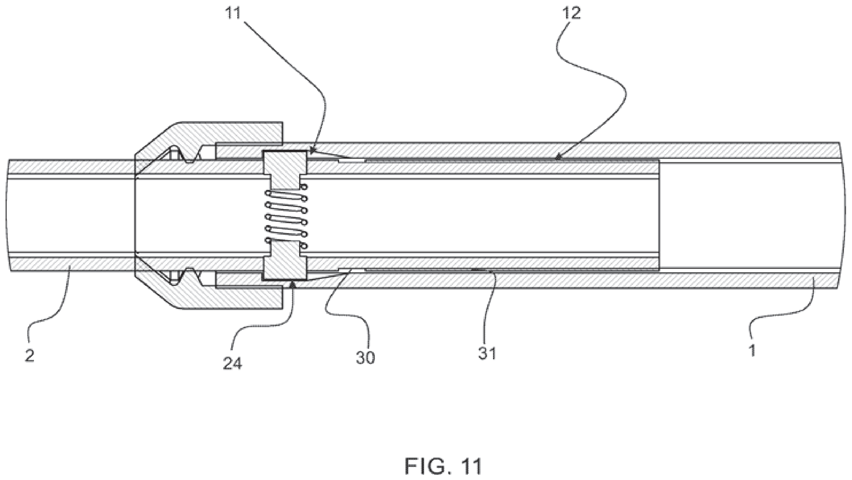

Figures 7 and 8 show in detail the transverse locks (24), where it can be seen that each of them has two pins (25), identical and symmetrically positioned axially, as well as each of said pins (25) having two diameters, a larger one (26) facing outwards and a smaller one (27) facing inwards, in the latter the ends of a cooperating helical spring (28) are trapped so that said pins are kept pressed outside and inside through holes (29A) and (29B), respectively, of the solid square inner segment (3) and the square tubular intermediate segment (2), keeping their larger diameter parts (26) pressed slidably against the inner surfaces, respectively, of the square tubular intermediate segment (2) and the square tubular outer segment (1), as well as in alignment with the respective stroke-limiting stop steps (22), where the final stop occurs when said segments are fully extended, preventing them from completely coming out of the tubular segment [33] Figures 9 to 11 show in detail the clearance compensators (12), where it can be seen that each of them is formed by an enveloping recess (30) that extends from the lower ends of the square tubular intermediate segment (2) and the solid square inner segment (3) to near the corresponding transverse lock (24), where each enveloping recess (30) receives a polymeric coating (31), whose external dimension exceeds the external dimension of the square tubular intermediate segment (2) and the solid square inner segment (3).

The polymeric coating (31) is applied by means of a known process of heating the corresponding ends of the square tubular intermediate segment (2) and the solid square inner segment (3) and immersing them in polyamide powder, forming a contact layer with a thickness between 2 and 6 mm.

Therefore, the aforementioned layers of polymeric coatings (31) constitute contact and sliding surfaces between the intermediate square tubular segment (2) and the solid square inner segment (3), where such layers contribute to reducing friction and eliminating noise between such telescopically moved parts, i.e., the intermediate square tubular segment (2) and the solid square inner segment (3) are telescopically moved into or out of the outer square tubular segment (1) and, on the one hand, such movements are performed smoothly and silently. When moved outwards, the limit is established by the transverse locks (24) and respective pins (25) which are embedded in the respective stop steps limiting the stroke (22) characterizing the maximum extension of the telescopic movement of the assembly. In this position, the telescopic movement in the direction of decreasing the length of the assembly occurs in reverse, that is, the internal solid segment (3) moves inwards and, with this, the pins (25) easily come out of the stop steps limiting the stroke (22) due to the inviting ramps (23) and continues its movement inwards until its inner end touches the second transverse (24) of the intermediate square tubular locking segment (2), causing it to also be moved inwards in the same way, allowing it to reach the fully retracted position.

## Claims

1. STEERING COLUMN, comprising a body in three telescopically mounted segments, an outer square tubular segment (1), without telescopic movement after being mounted on the vehicle, inside which slides an intermediate square tubular segment (2) and, inside this, slides a solid square inner segment (3); a sealing head (4) is positioned between the upper end of the outer square tubular segment (1) and the intermediate square tubular segment (2), as well as such head is fixed to the upper end of the first outer square tubular segment (1) serving as a sliding sealing point for the intermediate square tubular segment (2); the internal solid segment (3) has one end fitted with a grooved cylindrical terminal (5) and, on the opposite side, the external square tubular segment (1) is similarly fitted with another grooved cylindrical terminal (6), both fixed by welding, wherein the first has a hole (7) that receives a cylindrical tip (8) from the internal solid segment (3), while the other grooved cylindrical terminal (6) has an intermediate flange (9) and a cylindrical tip (10) inserted into the inside of the end of the external square tubular segment (1); a conventional universal joint (J) is coupled to the grooved cylindrical terminal (6), which may or may not also be provided in the grooved cylindrical terminal (5); stroke limiters (11) are mounted near the lower ends, respectively, of the intermediate square tubular segment (2) and the internal solid square segment (3); **characterized by** comprising gap compensators (12) mounted on the inner or lower ends of the square tubular intermediate segment (2) and the solid square inner segment (3), wherein each gap compensator (12) is formed by an enveloping recess (30) that extends from the lower ends of the square tubular intermediate segment (2) and the solid square inner segment (3) to near the corresponding transverse lock (24), where each enveloping recess (30) receives a polymeric coating (31), whose external dimension exceeds the external dimension of the square tubular intermediate segment (2) and the solid square inner segment (3), as also said polymeric coating (31) is applied by heating the corresponding ends of the square tubular intermediate segment (2) and the solid square inner segment (3) and immersing them in polyamide powder, configuring a contact layer with a thickness between 2 and 6 mm.

## Amended claims

### Amended claims under Art. 19.1 PCT

1. STEERING COLUMN, comprising a body in three telescopically mounted segments, an outer square tubular segment (1), without telescopic movement after being mounted on the vehicle, inside which slides an intermediate square tubular segment (2) and, inside this, slides a solid square inner segment (3); a sealing head (4) is positioned between the upper end of the outer square tubular segment (1) and the intermediate square tubular segment (2), as well as such head is fixed to the upper end of the first outer square tubular segment (1) serving as a sliding sealing point for the intermediate square tubular segment (2); the internal solid segment (3) has one end fitted with a grooved cylindrical terminal (5) and, on the opposite side, the external square tubular segment (1) is similarly fitted with another grooved cylindrical terminal (6), both fixed by welding, wherein the first has a hole (7) that receives a cylindrical tip (8) from the internal solid segment (3), while the other grooved cylindrical terminal (6) has an intermediate flange (9) and a cylindrical tip (10) inserted into the inside of the end of the external square tubular segment (1); a conventional universal joint (J) is coupled to the grooved cylindrical terminal (6), which may or may not also be provided in the grooved cylindrical terminal (5); stroke limiters (11) are mounted near the lower ends, respectively, of the intermediate square tubular segment (2) and the internal solid square segment (3); Clearance compensators (12) mounted on the inner or lower ends of the square tubular intermediate segment (2) and the solid square inner segment (3), each clearance compensator (12) being formed by an enveloping recess (30) that extends from the lower ends of the square tubular intermediate segment (2) and the solid square inner segment (3) to near the corresponding transverse lock (24), **characterized in that** each enveloping recess (30) receives a polymeric coating (31), whose external dimensions exceed the external dimensions of the square tubular intermediate segment (2) and the solid square inner segment (3), as said polymeric coating (31) is applied by heating the corresponding ends of the square tubular intermediate segment (2) and the solid square inner segment (3) and immersing them in polyamide powder, configuring a contact layer with a thickness between 2 and 6 mm.

Statement under Art. 19.1 PCT
The international search report points to three particularly relevant prior art issues. Therefore, the written opinion of the international search authority indicates that the application does not meet the requirement of inventive activity.

The Prior application BR 202022023589 (D1) discloses a steering column consisting of a body in three telescopically mounted segments, being an outer square tubular segment (1), inside which slides an intermediate square tubular segment (2) and, inside this, slides an inner solid square segment (3); a sealing head (4); splined cylindrical terminals (5) and (6); a conventional universal joint (J) coupled to the splined cylindrical terminal (6), stroke limiters (11) are mounted on the lower ends, respectively, of the intermediate square tubular segment (2) and the inner solid square segment (3); and at least one taiga compensator (12) is mounted on either face of the intermediate square tubular segment (2) and the inner solid square segment (3) (paragraphs [10-18]; fig. 1-10). In D1, the taiga compensators (12) are formed by a recess (30) and both receive leaf springs (31), arched outwards, with each taiga compensator (12) equally integrated into any external face and very close to the lower end of the intermediate square tubular segment (2) and the internal solid square segment (3), where one of the taiga compensators (12) acts against the corresponding internal face of the external square tubular segment (1), while the other acts in the same way against the corresponding face of the intermediate square tubular segment (2), eliminating any taiga, as well as improving the sliding between them and avoiding noise (paragraph 17; fig. 8).

The prior application BR202022017343 (D2) reveals the same subject matter as document D1.

On the other hand, the prior application US 2020276766 (D3) discloses a method and device for a steering column with mutually sliding components for greater freedom and more precise maintenance of frictional or sliding forces, from a plastic or sliding sleeve with a plastic coating in the displacement region of the components (paragraphs [0008-0015]). Specifically, D3 provides a plastic sleeve 30 adapted to the mutually facing surfaces of the inner shaft handle 15 and the outer shaft handle 17, by means of a heating process, improving sliding and reducing noise (paragraphs [0043-0048]; fig. 3-4).

The prior applications were deemed relevant, leading to the limitation of the claims framework in order to restrict the scope of protection.
